# EUROPEAN PATENT SPECIFICATION

(11) **EP 4 675 118 B1**
(45) Date of publication and mention of the grant of the patent: **09.09.2026**
(21) Application number: 24186331.5
(22) Date of filing: 03.07.2024
(51) Int. Cl.: F16C 19/38, F16C 23/08, F16C 33/78, F16C 35/073, F16C 43/04, F16J 15/3256, F16J 15/00, F16J 15/3204

(54) **ROLLING BEARING ASSEMBLY PROVIDED WITH TWO SLEEVES, AND ASSOCIATED SHAFT ASSEMBLY**
WÄLZLAGERANORDNUNG MIT ZWEI BUCHSEN UND ZUGEHÖRIGE WELLENANORDNUNG
ENSEMBLE PALIER À ROULEMENT MUNI DE DEUX MANCHONS, ET ENSEMBLE ARBRE ASSOCIÉ

(43) Date of publication of application: 07.01.2026
(73) Proprietor: NTN Wälzlager (Deutschland) GmbH, 40699 Erkrath (DE)
(72) Inventor: KOOP, Jakob, 32791 Lage (DE); WENZEL, Henning, 33615 Bielefeld (DE)
(74) Representative: Alatis

(56) References cited:
- DE-A1- 102019 113 027
- DE-A1- 2 008 665
- US-A1- 2016 290 401
- US-A1- 2024 003 387

## Description

### TECHNICAL FIELD OF THE INVENTION

The present invention relates to a rolling bearing assembly, in particular a spherical rolling bearing assembly, for guiding a shaft, e.g. a shaft of an agricultural machine, and to a shaft assembly including such a rolling bearing assembly.

### BACKGROUND ART

A rolling bearing assembly for an agricultural machine suitable for agricultural applications, in which the rolling bearing arrangement is often subjected to high and strongly alternating loads, is known from DE 10 2019 113 027A1. The rolling bearing is a spherical roller bearing with an inner bearing ring with two spherical inner raceways which are slightly inclined relative to one another and an outer bearing ring with a spherical outer raceway, wherein corresponding barrel-shaped rollers run in two rows on the two inner bearing ring raceways and the outer bearing ring raceway. The design as a spherical roller bearing with a spherical outer bearing ring raceway enables a relative tilting of the inner bearing ring relative to the outer bearing ring.

The rolling bearing is provided with two seals fixed relative to the outer bearing ring, in sliding contact with two sleeves fixed relative to the inner bearing ring. Each sleeve has a fixing portion having an interference-fit interface with a through hole of the inner wall of the inner bearing ring, a seat portion axially protruding from the fixing portion and from a respective end face of the inner bearing ring, and a cylindrical through hole which is operational to be mounted onto a shaft, with or without interference fit. The through holes of the two sleeves have the same nominal diameter, the aim being that their interference with the shaft on which they are mounted should be identical, to balance the stresses on the inner bearing ring. In practice, however, manufacturing and assembly tolerances are such that one of the two sleeves can be force-fitted onto the shaft while the other is loose. This results in unbalanced stresses on the inner bearing ring of the bearing, which can lead to excessive fatigue of the parts.

US2016290401A1 discloses a rolling bearing including: inner and outer members, rolling elements in a raceway space, flexible annular sealing members which close openings at both ends of the raceway space, and annular metal shield members. Each sealing member is formed in three-dimensional shape such that the sealing member in a natural state is convex inwardly between outer and inner circumferential edge portions and the inner circumferential edge portion is elastically in surface contact with the outer surface of the inner member when the sealing member is fitted to the outer member. Each metal shield member is fixed to the outer member in a state that the outer circumferential edge portion of each sealing member is sandwiched between the metal shield member and the outer member. Each metal shield member covers part of each sealing member without contacting the inner member. This document discloses a rolling bearing assembly according to the preamble of claim 1.

DE2008665 A1 discloses a spherical ball bearing, in particular for ball joints of articulated rods or the like. The ball bearing is mounted in a bearing housing, the inner ring of which has a mounting bore. A separate retaining ring projecting from the front is fitted to the inner ring of the spherical bearing. A circumferential surface of the retaining ring, which lies adjacent to the inner ring, forms a contact surface for a sealing element fixed relative to the bearing housing.

US2024003387A1 discloses a bearing unit comprising a radially inner ring including a stainless steel collar with a raceway, on which two sleeves made of reinforced polymeric material are co-moulded on opposite sides. As such, the radially inner ring of the bearing unit offers same nominal load values as inner rings are made entirely of metal, but with better corrosion resistance without losing the surface hardness properties.

### SUMMARY OF THE INVENTION

The invention aims to provide a rolling bearing assembly with two sleeves, which have an interference-fit interface with a through hole of the inner bearing ring and provide a controlled stress distribution in the inner bearing ring body despite wide manufacturing tolerances for the sleeves.

According to a first aspect of the invention, there is provided a rolling bearing assembly for guiding a shaft, the rolling bearing assembly comprising
- an inner bearing ring with two inner raceways defining a reference axis of the inner bearing ring, two opposite end faces facing axially away from each other and an inner wall facing the reference axis and defining a through hole of the inner bearing ring, centred on the reference axis and opening onto the two opposite end faces;
- a first sleeve comprising a fixing portion having an interference-fit interface with the inner wall of the inner bearing ring, a seat portion protruding from a first of the two opposite end faces of the inner bearing ring and a cylindrical inner interference wall operational to be fixed by interference-fit onto the shaft;
- a second sleeve located entirely outside a cylinder centred on the reference axis and tangent to the cylindrical inner interference wall of the first sleeve, at a distance of at least 10µm from the cylinder, the second sleeve comprising a fixing portion having an interference-fit interface with the inner wall of the inner bearing ring and a seat portion protruding from a second of the two opposite end faces of the inner bearing ring;
- at least one outer bearing ring, with one or more outer raceways;
- a first outer seal fixed relative to the outer bearing ring and in sliding contact with an annular seal seat of the seat portion of the first sleeve;
- a second outer seal fixed relative to outer bearing ring and in sliding contact with an annular seal seat of the seat portion of the second sleeve; and
- two rows of rolling elements, each of the two rows being in rolling contact with one of the one or more outer raceway(s) and a respective one of the two inner raceways, wherein the rolling elements each have a contact area with one of the two inner raceways, which is axially farther away from the second of the two end faces of the inner bearing ring than an axial end of the interference-fit interface of the first sleeve with the inner wall of the inner bearing ring.

The fact that the second sleeve surrounds at a distance the cylinder that is tangent to the cylindrical inner interference wall ensures that there will be no contact or at least no interference fit between the second sleeve and the shaft when the first sleeve is fixed by interference fit onto the shaft. As a result, the transmission of forces between the inner bearing ring and the shaft passes entirely through the first sleeve, which extends inside the through hole of the inner bearing ring beneath the two inner raceways.

In a preferred embodiment, a portion of the interference-fit interface between the fixing portion of the first sleeve and the inner wall of the inner bearing ring is closer to the second of the two end faces than to the first of the two end faces. This will be the case, in particular, when the inner bearing ring has a plane of symmetry perpendicular to the reference axis.

The interference fit between the inner bearing ring and the sleeves can be obtained by force-fitting or shrink-fitting. The interference-fit interface between the fixing portion of the first sleeve and the inner wall of the inner bearing ring can be cylindrical. Similarly, the interference-fit interface between the fixing portion of the second sleeve and the inner wall of the inner bearing ring can be cylindrical.

The seat portion of the first sleeve can have an annular shoulder that bears against the first end face of the two end faces. The seat portion of the second sleeve can have an annular shoulder that bears against the second of the two end faces.

Preferably, there is no contact between the first sleeve and the second sleeve. The relative position of the inner bearing ring and of each sleeve is precisely defined in the axial and radial direction.

In a preferred embodiment, each sleeve is preferably made in one piece. In an alternative embodiment, each seal seat can be formed on an auxiliary ring fixed by interference fit to a body of a respective one of the two sleeves. This can be the case, in particular, if each seal and the associated seal seat are parts of cassette seal with one or several sealing lips and one or more anti-dust lips integrated into a labyrinth system.

Various shapes of the seal seats can be considered. In particular, the annular seal seat of the seat portion of the first sleeve can face radially away from the reference axis. The annular seal seat of the seat portion of the second sleeve can face radially away from the reference axis. The annular seal seat of the seat portion of the first sleeve can face axially away from the inner bearing ring. The annular seal seat of the seat portion of the second sleeve can face axially away from the inner bearing ring. The annular seal seat of the seat portion of the first sleeve can be tapered. The annular seal seat of the seat portion of the second sleeve can be tapered. The annular seal seat of the seat portion of the first sleeve can have a convex shape, preferably with a constant radius of curvature, viewed in section through a section plane containing the reference axis. The annular seal seat of the seat portion of the second sleeve can have a convex shape, preferably with a constant radius of curvature, viewed in section through a section plane containing the reference axis.

The rolling bearing assembly is particularly suitable for an agricultural machine suitable for agricultural applications, in which the rolling bearing assembly is likely to be subjected to high and strongly alternating loads in a severe and dirty environment.

In one embodiment, the one or more outer raceways consist of one spherical raceway and the rolling elements are barrel-shaped rollers. The design as a spherical roller bearing with a spherical outer bearing ring raceway enables a relative tilting of the inner bearing ring relative to the outer bearing ring of e.g. +/-0,5°, which means that the spherical roller bearing can easily accommodate such a tilting. Preferably, the annular seal seat of the seat portion of the first sleeve and the annular seal seat of the seat portion of the second sleeve can be located on a common sphere centred on the reference axis. The profile of the seal seat is such that it allows the spherical roller bearing to be tilted without compromising sealing performance.

The first and second outer seals can have a seal body made of rubber or more generally of an elastomeric material. They may include a reinforcing armature, which may be partially embedded in or overmoulded by the seal body. The seal body can have one or several lips in sliding contact with the associated seal seat, with or without an annular spring.

In one embodiment, a casing encloses the outer bearing ring and is fixed relative to the outer bearing ring. Optionally, at least one of the first outer seal and second outer seal is fixed to a casing body of the casing, enclosing the outer bearing ring. Optionally, at least one of the first outer seal and second outer seal is fixed to a casing body of the casing, enclosing the outer bearing ring.

In one embodiment, two inner seals are provided, each fixed to the outer bearing ring, the two inner seals being located axially between the first and second outer seals, the spherical outer raceway being located axially between the two inner seals, the inner bearing ring being provided with two inner seal seats, the two inner raceways of the inner bearing ring being located axially between the two inner seal seats, each of the two inner seals being in sliding contact with a respective one of the two inner seal seats. An annular space is defined between each inner seal and the adjacent outer seal, which is preferably at least partially filled with grease. The two inner seal seats are preferably tapered or convex viewed in section by a section plane containing the reference axis, so as to face axially away from the raceways of the inner bearing ring and radially away from the reference axis.

The seat portion of the first sleeve can have an annular end face which faces axially away from the fixing portion of the first sleeve and is preferably planar. Similarly, the seat portion of the second sleeve can have an annular end face which faces axially away from the fixing portion of the second sleeve and is preferably planar.

The above-mentioned embodiments can be combined.

According to another aspect of the invention, there is provided a shaft assembly comprising a rolling bearing assembly as described hereinbefore and a shaft having an interference-fit interface with the inner interference wall of the first sleeve and no contact with the second sleeve. In one embodiment, the shaft has a shoulder, and the seat portion of one of the first and second sleeves has an annular end face which bears against the shoulder. In one embodiment, a spacer ring is provided, which is fitted to the shaft, and the seat portion of one of the first and second sleeves has an annular end face which bears against the spacer ring.

A method (not claimed) of manufacturing a rolling bearing assembly as described hereinbefore, comprises a step of manufacturing first sleeves and a step of manufacturing second sleeves, wherein manufacturing tolerances of the cylindrical inner interference wall of the first sleeves and of the second sleeve are such that after assembly, for more than 99% of the first sleeves and more than 99% of the second sleeves a central through hole of the second sleeves has a diameter which is greater than a diameter of the cylindrical inner interference wall of the first sleeve plus 10µm.

### BRIEF DESCRIPTION OF THE FIGURES

Other advantages and features of the invention will then become more clearly apparent from the following description of a specific embodiment of the invention given as non-restrictive example only and represented in the accompanying drawings in which:
- figure 1 is a longitudinal section of a shaft assembly according to one embodiment of the invention;
- figure 2 is a detail of figure 1
- figure 3 is a detail of figure 1.
- figure 4 is a detail of figure 3.

Corresponding reference numerals refer to the same or corresponding parts in each of the figures.

### DETAILED DESCRIPTION OF PREFERRED EMBODIMENTS

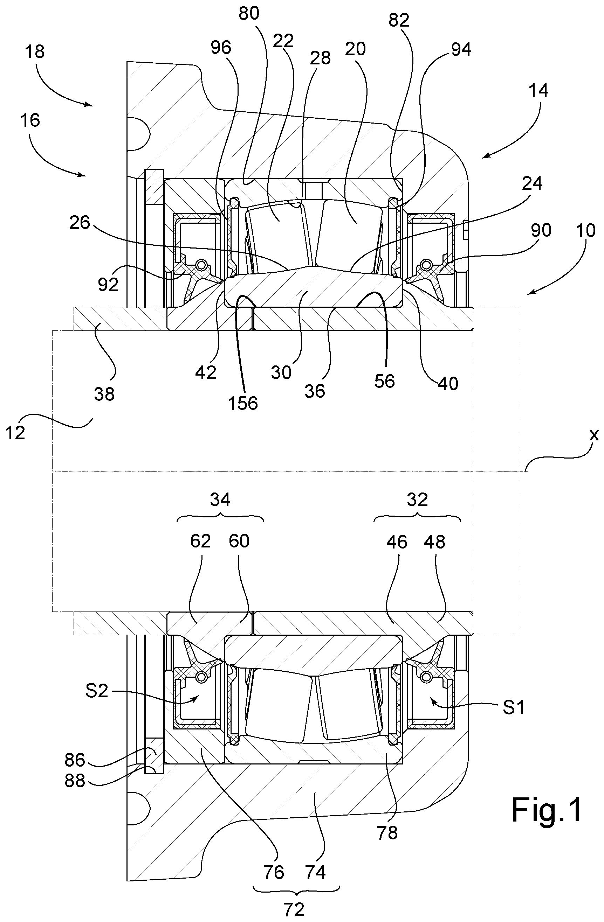

With reference to Figure **1****,** a shaft assembly **10** comprises a shaft **12** and a rolling bearing assembly **14** fitted onto the shaft **12.**

The rolling bearing assembly **14** comprises a rotative subassembly **16,** a fixed subassembly **18** and two rows of rolling elements **20, 22** in rolling contact with inner and outer raceways **24, 26, 28** formed on the rotative and fixed subassemblies **18, 20.**

The rotative subassembly **16** comprises an inner bearing ring **30,** a first sleeve **32** and a second sleeve **34,** both partly inserted into a central through hole **36** of the inner bearing ring **30,** and an optional spacer ring **38.**

The inner bearing ring **30,** which is made of a single piece of metal, preferably steel, is formed with the two inner raceways **24, 26** defining a reference axis **X** of the inner bearing ring **30,** two opposite end faces **40, 42** facing axially away from each other and an inner wall **44,** which faces the reference axis **X** and defines the through hole **36** of the inner bearing ring **30,** centred on the reference axis **X** and opened onto the two opposite first and second end faces **40, 42.** Viewed in a plane containing the reference axis **X** (e.g. the plane of figure **1**), the two inner raceways **24, 26** have a circular cross-section and face axially away from each other.

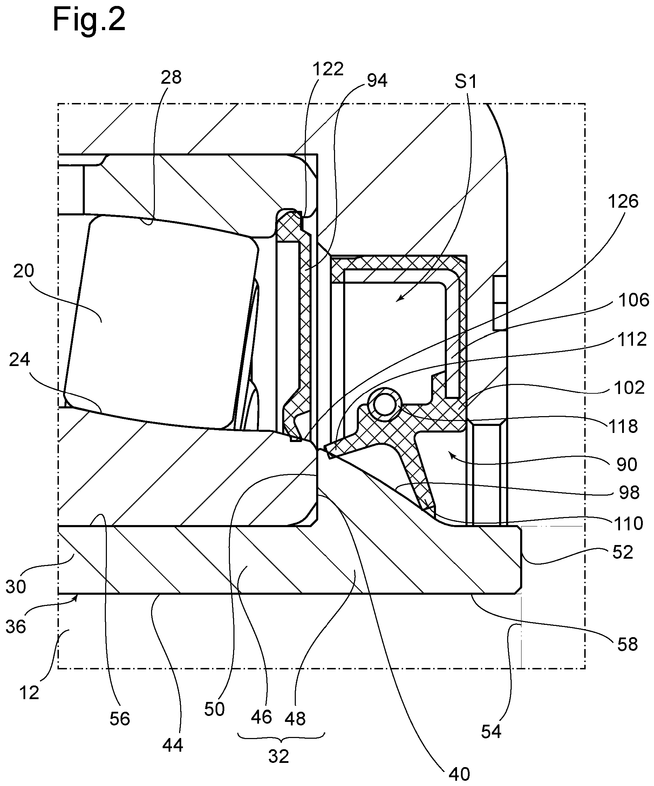

With reference to figure **2****,** the first sleeve **32,** which is made of a single piece of metal, preferably steel, comprises a fixing portion **46** inserted into the through hole of the inner bearing ring and a seat portion **48** protruding from the first end face **40** of the inner bearing ring **30.** The seat portion **48** has an annular shoulder **50** that bears against the first end face **40** or the inner bearing ring **30** and an end face **52** in contact with a shoulder **54** formed on the shaft **12.** The fixing portion **46** forms a cylindrical interference-fit interface **56** with the inner wall **44** of the inner bearing ring **30.** The first sleeve **32** is provided with a through hole, which defines a cylindrical inner interference wall **58** aligned on the reference axis **X** and fixed by interference-fit onto the shaft **12.**

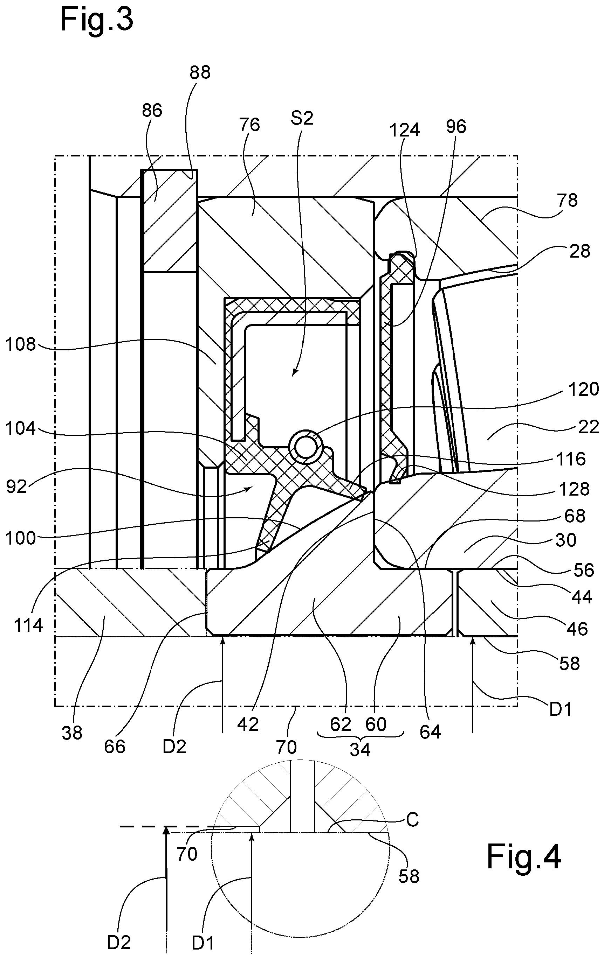

With reference to figure **3****,** the second sleeve **34,** which is made of a single piece of metal, preferably steel, comprises a fixing portion **60** inserted into the through hole **36** of the inner bearing ring **30** and a seat portion **62** protruding from the second end face **42** of the inner bearing ring **30.** The seat portion **62** has an annular shoulder **64** that bears against the second end face **42** of the inner bearing ring **30** and an end face **66** in contact with the optional spacer ring **38.** The fixing portion **60** forms a cylindrical interference-fit interface **68** with the inner wall **44** of the inner bearing ring **30.** The length of the fixing portion **46** of the first sleeve **32** is greater than that of the fixing portion **60** of the second sleeve **34,** such that a portion of the interference-fit interface **56** between the fixing portion **46** of the first sleeve **32** and the inner wall **44** of the inner bearing ring **30** is closer to the second end face **42** than to the first end face **40.** The second sleeve **34** is provided with a through hole **70** aligned with the reference axis **X.** Remarkably, and as illustrated in figure **4****,** this through hole **70** has a diameter **D2** at least 10µm, and preferably at least 15µm, greater than the diameter **D1** of the cylindrical inner interference wall **58** of the first sleeve **32,** and therefore without contact with the shaft **12.** As a result, the second sleeve **34** is located entirely outside a cylinder centred on the reference axis **X** and tangent to the cylindrical inner interference wall **58** of the first sleeve **32,** at a distance of at least 10µm from the cylinder **C.**

The fixed subassembly **18** comprises a casing **72** with a casing body **74** and a seal carrier **76,** an outer bearing ring **78** fitted into a cylindrical cavity **80** of the casing body **74** and bearing axially against an annular end wall **82** of the casing body **74,** and a retaining ring **86** inserted in an annular groove **88** of the casing body **74.** The outer bearing ring **78** is preferably made in one piece of metal. The outer raceway **28** is spherical, i.e. it has the shape of a spherical zone, with a plane of symmetry parallel to the bases of the spherical zone.

The fixed subassembly further comprises a pair of outer seals **90, 92** and a pair of inner seals **94, 96.** The two outer seals **90, 92** are located axially at a distance from each other, on either end of the bearing rings **30, 78,** and define a first protection barrier against external pollutants. The two inner seals **94, 96** are each interposed between the raceways **24, 26, 28** of the inner and outer bearing rings **30, 78** and a respective one of the outer seals **90, 92.** An annular space S**1,** S**2** is defined between each inner seal **94, 96** and the adjacent outer seal **90, 92.** This annular space S**1,** S**2** is preferably at least partially filled with grease.

More specifically, a first outer seal **90** is fixed to the casing body **74** and in sliding contact with an annular seal seat **98** of the seat portion **48** of the first sleeve **32,** and a second outer seal **92** is fixed to the casing seal carrier **76** and in sliding contact with an annular seal seat **100** of the seat portion **62** of the second sleeve **34.** The annular seal seats **98, 100** are located on a common sphere centred on the reference axis **X.** The first and second outer seals **90, 92** can have a seal body **102, 104** made of rubber or more generally of an elastomeric material. They can include a reinforcing armature **106, 108,** which can be partially or totally embedded in the seal body **102, 104.** The seal body **102, 104** can have one or several lips **110, 112, 114, 116** in sliding contact with the associated seal seat **98, 100,** with or without an annular spring **118, 120.**

Each of the two inner seals **94, 96** is engaged into a fixing groove **122, 124** formed between one axial end of the outer ring **78** and the spherical raceway **28** and extends towards the inner bearing ring **30** so as to make sliding contact with a respective inner seal seat **126, 128** formed on the inner ring **30.** The two inner raceways **24, 26** of the inner bearing ring **30** are located axially between the two inner seal seats **126, 128.** The two inner seal seats **126, 128** are preferably tapered or convex viewed in section by the plane of figure **1****,** so as to face axially away from the inner raceways **24, 26** of the inner bearing ring **30** and radially away from the reference axis **X.** Ideally, they are located on a common sphere centred on the reference axis **X.**

The rolling elements **20, 22** are barrel-shaped rollers, distributed in two rows each in rolling contact with the outer raceway **28** and a respective one of the two inner raceways **24, 26.** The rolling elements **20, 22** each have a contact area with one of the two inner raceways **24, 26,** which is axially farther away from the second end face **42** of the inner bearing ring **30** than an axial end **156** of the interference-fit interface **56** of the first sleeve **32** with the inner wall **44** of the inner bearing ring **30.** In other words, any plane perpendicular to the reference axis **X,** which crosses the contact area necessarily crosses the interference-fit interface **56.** This ensures that forces applied at the contact area will be transmitted to the first sleeve **32** through the interference-fit interface **56.** Moreover, any plane which is perpendicular to the reference axis **X** and crosses the contact area necessarily crosses the cylindrical inner interference wall **58** of the first sleeve **32,** to ensure that forces applied at the contact area will be further transmitted to the shaft **12** through the cylindrical inner interference wall **58,** without generating excessive strain in the first sleeve **32.**

The rolling bearing assembly **14** described so far is a spherical bearing assembly with two rows of barrel-shaped rollers **20, 24** for heavy-duty applications, e.g. for agricultural tooling. It enables a relative tilting of the inner bearing ring relative to the outer bearing ring of e.g. +/-0,5°.

The invention, however, can also be applied to other types of bearings with two rows of rolling elements, with one or two outer rings.

## Claims

1. A rolling bearing assembly (14) for guiding a shaft (12), the rolling bearing assembly (14) comprising
- an inner bearing ring (30) with two inner raceways (24, 26) defining a reference axis (X) of the inner bearing ring (30), two opposite end faces (40, 42) facing axially away from each other and an inner wall (44) facing the reference axis (X) and defining a through hole (36) of the inner bearing ring (30), centred on the reference axis (X) and opening onto the two opposite end faces (40, 42);
- a first sleeve (32) comprising a fixing portion (46) having an interference-fit interface (56) with the inner wall (44) of the inner bearing ring (30), a seat portion (48) protruding from a first of the two opposite end faces (40, 42) of the inner bearing ring (30) and a cylindrical inner interference wall (58) operational to be fixed by interference-fit onto the shaft (12);
- a second sleeve (34) comprising a fixing portion (60) having an interference-fit interface (68) with the inner wall (44) of the inner bearing ring (30) and a seat portion (62) protruding from a second of the two opposite end faces (40, 42) of the inner bearing ring (30);
- at least one outer bearing ring (78), with one or more outer raceways (28);
- a first outer seal (90) fixed relative to the outer bearing ring (78) and in sliding contact with an annular seal seat (98) of the seat portion (48) of the first sleeve (32);
- a second outer seal (92) fixed relative to outer bearing ring (78) and in sliding contact with an annular seal seat (100) of the seat portion (62) of the second sleeve (34); and
- two rows of rolling elements (20, 22), each of the two rows (20, 22) being in rolling contact with one of the one or more outer raceway(s) (28) and a respective one of the two inner raceways (24, 26), wherein the rolling elements (20, 22) each have a contact area with one of the two inner raceways (24, 26), which is axially farther away from the second (42) of the two end faces (40, 42) of the inner bearing ring (30) than an axial end of the interference-fit interface (56) of the first sleeve (32) with the inner wall (44) of the inner bearing ring (30),
**characterised in that** the second sleeve (34) is located entirely outside a cylinder centred on the reference axis (X) and tangent to the cylindrical inner interference wall (58) of the first sleeve (32), at a distance of at least 10µm from the cylinder.

2. The rolling bearing assembly (14) of claim 1, wherein a portion of the interference-fit interface (56) between the fixing portion (46) of the first sleeve (32) and the inner wall (44) of the inner bearing ring (30) is closer to the second (42) of the two end faces (40, 42) than to the first (40) of the two end faces (40, 42).

3. The rolling bearing assembly (14) of any one of the preceding claims, wherein
- the interference-fit interface (56) between the fixing portion (46) of the first sleeve (32) and the inner wall (44) of the inner bearing ring (30) is cylindrical, and/or
- the interference-fit interface (68) between the fixing portion (60) of the second sleeve (34) and the inner wall (44) of the inner bearing ring (30) is cylindrical.

4. The rolling bearing assembly (14) of any one of the preceding claims, wherein
- the seat portion (48) of the first sleeve (32) has an annular shoulder (50) that bears against the first end face (40) of the two end faces (40, 42); and/or
- the seat portion (62) of the second sleeve (34) has an annular shoulder (64) that bears against the second (42) of the two end faces (40, 42).

5. The rolling bearing assembly (14) of any one of the preceding claims, wherein there is no contact between the first sleeve (32) and the second sleeve (34).

6. The rolling bearing assembly (14) of any one of the preceding claims, wherein
- the annular seal seat (98) of the seat portion (48) of the first sleeve (32) faces radially away from the reference axis (X); and/or
- the annular seal seat (100) of the seat portion (62) of the second sleeve (34) faces radially away from the reference axis (X); and/or
- the annular seal seat (98) of the seat portion (48) of the first sleeve (32) faces axially away from the inner bearing ring (30); and/or
- the annular seal seat (100) of the seat portion (62) of the second sleeve (34) faces axially away from the inner bearing ring (30); and/or
- the annular seal seat (98) of the seat portion (48) of the first sleeve (32) is tapered; and/or
- the annular seal seat (100) of the seat portion (62) of the second sleeve (34) is tapered; and/or
- the annular seal seat (98) of the seat portion (48) of the first sleeve (32) has a convex shape, preferably with a constant radius of curvature, viewed in section through a section plane containing the reference axis (X); and/or
- the annular seal seat (100) of the seat portion (62) of the second sleeve (34) has a convex shape, preferably with a constant radius of curvature, viewed in section through a section plane containing the reference axis.

7. The rolling bearing assembly (14) of any one of the preceding claims, wherein the one or more outer raceways (28) consist of one spherical raceway and the rolling elements (20, 22) are barrel-shaped rollers.

8. The rolling bearing assembly (14) of claim 7, wherein the annular seal seat (98) of the seat portion (48) of the first sleeve (32) and the annular seal seat (100) of the seat portion (62) of the second sleeve (34) are located on a common sphere centred on the reference axis (X).

9. The rolling bearing assembly (14) of any one of the preceding claims, further comprising a casing (72) enclosing the outer bearing ring (78) and fixed relative to the outer bearing ring (72).

10. The rolling bearing assembly (14) of claim 9, wherein
- at least one of the first outer seal (90) and second outer seal (92) is fixed to a casing body (74) of the casing (72), enclosing the outer bearing ring (78); and/or
- at least one of the first outer seal (90) and second outer seal (92) is fixed to an annular seal carrier (76) of the casing (72).

11. The rolling bearing assembly (14) of any one of the preceding claims, further comprising two inner seals (94, 96), each fixed to the outer bearing ring (78), the two inner seals (94, 96) being located axially between the first and second outer seals (90, 92), the spherical outer raceway (28) being located axially between the two inner seals (94, 96), the inner bearing ring (30) being provided with two inner seal seats (126, 128), the two inner raceways (24, 26) of the inner bearing ring (30) being located axially between the two inner seal seats (126, 128), each of the two inner seals (94, 96) being in sliding contact with a respective one of the two inner seal seats (126, 128).

12. A shaft assembly (10) comprising a rolling bearing assembly (14) according to any one of the preceding claims and a shaft (12) having an interference-fit interface with the inner interference wall (58) of the first sleeve (32) and no contact with the second sleeve (34).

13. The shaft assembly (10) of claim 12, wherein the shaft (12) has a shoulder (54), and the seat portion (48, 62) of one of the first and second sleeves (32, 34) has an annular end face (52, 66) which bears against the shoulder (54).

14. The shaft assembly (10) of claim 11 or claim 12, further comprising a spacer ring (38) fitted to the shaft (12), and the seat portion (48, 62) of one of the first and second sleeves (32, 34) has an annular end face (52, 66) which bears against the spacer ring (38).

## Patentansprüche

1. Wälzlageranordnung (14) zum Führen einer Welle (12), wobei die Wälzlageranordnung (14) umfasst
- einen Innenlagerring (30) mit zwei inneren Laufbahnen (24, 26), die eine Referenzachse (X) des Innenlagerrings (30) definieren, zwei gegenüberliegenden Stirnflächen (40, 42), die axial voneinander abgewandt sind, und einer Innenwand (44), die der Referenzachse (X) zugewandt ist und ein Durchgangsloch (36) des Innenlagerrings (30) definiert, das auf der Referenzachse (X) zentriert ist und sich zu den beiden gegenüberliegenden Stirnflächen (40, 42) hin öffnet;
- eine erste Hülse (32), umfassend einen Befestigungsabschnitt (46) mit einer Presspassungsschnittstelle (56) mit der Innenwand (44) des Innenlagerrings (30), einen Sitzabschnitt (48), der von einer ersten der beiden gegenüberliegenden Stirnflächen (40, 42) des Innenlagerrings (30) vorsteht, und eine zylindrische innere Presswand (58), die ausgebildet ist, um durch Presspassung auf der Welle (12) befestigt zu werden;
- eine zweite Hülse (34), umfassend einen Befestigungsabschnitt (60), der eine Presspassungsschnittstelle (68) mit der Innenwand (44) des Innenlagerrings (30) aufweist, und einen Sitzabschnitt (62), der von einer zweiten der beiden gegenüberliegenden Stirnflächen (40, 42) des Innenlagerrings (30) vorsteht;
- mindestens ein Außenlagerring (78) mit einer oder mehreren äußeren Laufbahnen (28);
- eine erste äußere Dichtung (90), die relativ zu dem Außenlagerring (78) befestigt ist und in Gleitkontakt mit einem ringförmigen Dichtungssitz (98) des Sitzabschnitts (48) der ersten Hülse (32) steht;
- eine zweite äußere Dichtung (92), die relativ zu dem Außenlagerring (78) befestigt ist und in Gleitkontakt mit einem ringförmigen Dichtungssitz (100) des Sitzabschnitts (62) der zweiten Hülse (34) steht; und
- zwei Reihen von Wälzkörpern (20, 22), wobei jede der zwei Reihen (20, 22) in Wälzkontakt mit einer der einen oder mehreren äußeren Laufbahn(en) (28) und einer jeweiligen der zwei inneren Laufbahnen (24, 26) steht, wobei die Wälzkörper (20, 22) jeweils eine Kontaktfläche mit einer der zwei inneren Laufbahnen (24, 26) aufweisen, die axial weiter von der zweiten (42) der zwei Stirnflächen (40, 42) des Innenlagerrings (30) entfernt ist als ein axiales Ende der Presspassungsschnittstelle (56) der ersten Hülse (32) mit der Innenwand (44) des Innenlagerrings (30),
**dadurch gekennzeichnet, dass** die zweite Hülse (34) vollständig außerhalb eines auf der Referenzachse (X) zentrierten und tangential zu der zylindrischen inneren Presswand (58) der ersten Hülse (32) verlaufenden Zylinders in einem Abstand von mindestens 10 µm von dem Zylinder angeordnet ist.

2. Wälzlageranordnung (14) nach Anspruch 1, wobei ein Abschnitt der Presspassungsschnittstelle (56) zwischen dem Befestigungsabschnitt (46) der ersten Hülse (32) und der Innenwand (44) des Innenlagerrings (30) näher an der zweiten (42) der beiden Stirnflächen (40, 42) als an der ersten (40) der beiden Stirnflächen (40, 42) ist.

3. Wälzlageranordnung (14) nach einem der vorstehenden Ansprüche, wobei
- die Presspassungsschnittstelle (56) zwischen dem Befestigungsabschnitt (46) der ersten Hülse (32) und der Innenwand (44) des Innenlagerrings (30) zylindrisch ist, und/oder
- die Presspassungsschnittstelle (68) zwischen dem Befestigungsabschnitt (60) der zweiten Hülse (34) und der Innenwand (44) des Innenlagerrings (30) zylindrisch ist.

4. Wälzlageranordnung (14) nach einem der vorstehenden Ansprüche, wobei
- der Sitzabschnitt (48) der ersten Hülse (32) eine ringförmige Schulter (50) aufweist, die an der ersten Stirnfläche (40) der beiden Stirnflächen (40, 42) anliegt; und/oder
- der Sitzabschnitt (62) der zweiten Hülse (34) eine ringförmige Schulter (64) aufweist, die an der zweiten (42) der beiden Stirnflächen (40, 42) anliegt.

5. Wälzlageranordnung (14) nach einem der vorstehenden Ansprüche, wobei kein Kontakt zwischen der ersten Hülse (32) und der zweiten Hülse (34) besteht.

6. Wälzlageranordnung (14) nach einem der vorstehenden Ansprüche, wobei
- der ringförmige Dichtungssitz (98) des Sitzabschnitts (48) der ersten Hülse (32) radial von der Referenzachse (X) abgewandt ist; und/oder
- der ringförmige Dichtungssitz (100) des Sitzabschnitts (62) der zweiten Hülse (34) radial von der Referenzachse (X) abgewandt ist; und/oder
- der ringförmige Dichtungssitz (98) des Sitzabschnitts (48) der ersten Hülse (32) axial von dem Innenlagerring (30) abgewandt ist; und/oder
- der ringförmige Dichtungssitz (100) des Sitzabschnitts (62) der zweiten Hülse (34) von dem Innenlagerring (30) axial abgewandt ist; und/oder
- der ringförmige Dichtungssitz (98) des Sitzabschnitts (48) der ersten Hülse (32) verjüngt ist; und/oder
- der ringförmige Dichtungssitz (100) des Sitzabschnitts (62) der zweiten Hülse (34) sich verjüngt; und/oder
- der ringförmige Dichtungssitz (98) des Sitzabschnitts (48) der ersten Hülse (32) eine konvexe Form aufweist, vorzugsweise mit einem konstanten Krümmungsradius, betrachtet im Schnitt durch eine die Referenzachse (X) enthaltende Schnittebene; und/oder
- der ringförmige Dichtungssitz (100) des Sitzabschnitts (62) der zweiten Hülse (34) eine konvexe Form aufweist, vorzugsweise mit einem konstanten Krümmungsradius, betrachtet im Schnitt durch eine die Referenzachse enthaltende Schnittebene.

7. Wälzlageranordnung (14) nach einem der vorstehenden Ansprüche, wobei die eine oder mehreren äußeren Laufbahnen (28) aus einer sphärischen Laufbahn bestehen und die Wälzkörper (20, 22) tonnenförmige Rollen sind.

8. Wälzlageranordnung (14) nach Anspruch 7, wobei der ringförmige Dichtungssitz (98) des Sitzabschnitts (48) der ersten Hülse (32) und der ringförmige Dichtungssitz (100) des Sitzabschnitts (62) der zweiten Hülse (34) auf einer gemeinsamen, auf der Referenzachse (X) zentrierten Kugel angeordnet sind.

9. Wälzlageranordnung (14) nach einem der vorstehenden Ansprüche, ferner umfassend ein Gehäuse (72), das den Außenlagerring (78) umschließt und relativ zu dem Außenlagerring (72) befestigt ist.

10. Wälzlageranordnung (14) nach Anspruch 9, wobei
- mindestens eine der ersten äußeren Dichtung (90) und der zweiten äußeren Dichtung (92) an einem Gehäusekörper (74) des Gehäuses (72) befestigt ist, der den Außenlagerring (78) umschließt; und/oder
- mindestens eine der ersten äußeren Dichtung (90) und der zweiten äußeren Dichtung (92) an einem ringförmigen Dichtungsträger (76) des Gehäuses (72) befestigt ist.

11. Wälzlageranordnung (14) nach einem der vorstehenden Ansprüche, ferner umfassend zwei innere Dichtungen (94, 96), die jeweils an dem Außenlagerring (78) befestigt sind, wobei die zwei inneren Dichtungen (94, 96) axial zwischen der ersten und der zweiten äußeren Dichtung (90, 92) angeordnet sind, wobei die kugelförmige äußere Laufbahn (28) axial zwischen den zwei inneren Dichtungen (94, 96) angeordnet ist, wobei der Innenlagerring (30) mit zwei inneren Dichtungssitzen (126, 128) bereitgestellt wird, wobei die zwei inneren Laufbahnen (24, 26) des Innenlagerrings (30) axial zwischen den zwei inneren Dichtungssitzen (126, 128) angeordnet sind, wobei jede der zwei inneren Dichtungen (94, 96) in Gleitkontakt mit einem jeweiligen der zwei inneren Dichtungssitze (126, 128) steht.

12. Wellenanordnung (10), umfassend eine Wälzlageranordnung (14) nach einem der vorstehenden Ansprüche und eine Welle (12), die eine Presspassungsschnittstelle mit der inneren Presswand (58) der ersten Hülse (32) und keinen Kontakt mit der zweiten Hülse (34) aufweist.

13. Wellenanordnung (10) nach Anspruch 12, wobei die Welle (12) eine Schulter (54) aufweist und der Sitzabschnitt (48, 62) von einer der ersten und der zweiten Hülse (32, 34) eine ringförmige Stirnfläche (52, 66) aufweist, die an der Schulter (54) anliegt.

14. Wellenanordnung (10) nach Anspruch 11 oder 12, ferner umfassend einen auf die Welle (12) gepassten Abstandsring (38), und wobei der Sitzabschnitt (48, 62) von einer der ersten und der zweiten Hülse (32, 34) eine ringförmige Stirnfläche (52, 66) aufweist, die an dem Abstandsring (38) anliegt.

## Revendications

1. Ensemble palier à roulement (14) permettant de guider un arbre (12), l'ensemble palier à roulement (14) comprenant
- une bague de palier interne (30) avec deux chemins de roulement internes (24, 26) définissant un axe de référence (X) de la bague de palier interne (30), deux faces d'extrémité opposées (40, 42) orientées axialement à l'opposé l'une de l'autre et une paroi interne (44) faisant face à l'axe de référence (X) et définissant un trou traversant (36) de la bague de palier interne (30), centré sur l'axe de référence (X) et débouchant sur les deux faces d'extrémité opposées (40, 42) ;
- un premier manchon (32) comprenant une partie de fixation (46) ayant une interface à ajustement serré (56) avec la paroi interne (44) de la bague de palier interne (30), une partie siège (48) faisant saillie à partir d'une première des deux faces d'extrémité opposées (40, 42) de la bague de palier interne (30) et une paroi d'interférence interne cylindrique (58) fonctionnelle pour être fixée par ajustement serré sur l'arbre (12) ;
- un second manchon (34) comprenant une partie de fixation (60) ayant une interface à ajustement serré (68) avec la paroi interne (44) de la bague de palier interne (30) et une partie siège (62) faisant saillie à partir d'une seconde des deux faces d'extrémité opposées (40, 42) de la bague de palier interne (30) ;
- au moins une bague de palier externe (78), avec un ou plusieurs chemins de roulement externes (28) ;
- un premier joint externe (90) fixé par rapport à la bague de palier externe (78) et en contact coulissant avec un siège de joint annulaire (98) de la partie siège (48) du premier manchon (32) ;
- un second joint externe (92) fixé par rapport à la bague de palier externe (78) et en contact coulissant avec un siège de joint annulaire (100) de la partie siège (62) du second manchon (34) ; et
- deux rangées d'éléments de roulement (20, 22), chacune des deux rangées (20, 22) étant en contact roulant avec l'un parmi le ou les chemin(s) de roulement externes (28) et un chemin de roulement respectif des deux chemins de roulement internes (24, 26), dans lequel les éléments de roulement (20, 22) ont chacun une zone de contact avec l'un des deux chemins de roulement internes (24, 26), qui est axialement plus éloignée de la seconde (42) des deux faces d'extrémité (40, 42) de la bague de palier interne (30) qu'une extrémité axiale de l'interface à ajustement serré (56) du premier manchon (32) avec la paroi interne (44) de la bague de palier interne (30),
**caractérisé en ce que** le second manchon (34) est situé entièrement à l'extérieur d'un cylindre centré sur l'axe de référence (X) et tangent à la paroi d'interférence interne cylindrique (58) du premier manchon (32), à une distance d'au moins 10 µm du cylindre.

2. Ensemble palier à roulement (14) selon la revendication 1, dans lequel une partie de l'interface à ajustement serré (56) entre la partie de fixation (46) du premier manchon (32) et la paroi interne (44) de la bague de palier interne (30) est plus proche de la seconde (42) des deux faces d'extrémité (40, 42) que de la première (40) des deux faces d'extrémité (40, 42).

3. Ensemble palier à roulement (14) selon l'une quelconque des revendications précédentes, dans lequel
- l'interface à ajustement serré (56) entre la partie de fixation (46) du premier manchon (32) et la paroi interne (44) de la bague de palier interne (30) est cylindrique, et/ou
- l'interface à ajustement serré (68) entre la partie de fixation (60) du second manchon (34) et la paroi interne (44) de la bague de palier interne (30) est cylindrique.

4. Ensemble palier à roulement (14) selon l'une quelconque des revendications précédentes, dans lequel
- la partie siège (48) du premier manchon (32) a un épaulement annulaire (50) qui s'appuie contre la première face d'extrémité (40) des deux faces d'extrémité (40, 42) ; et/ou
- la partie siège (62) du second manchon (34) a un épaulement annulaire (64) qui s'appuie contre la seconde (42) des deux faces d'extrémité (40, 42).

5. Ensemble palier à roulement (14) selon l'une quelconque des revendications précédentes, dans lequel il n'y a pas de contact entre le premier manchon (32) et le second manchon (34).

6. Ensemble palier à roulement (14) selon l'une quelconque des revendications précédentes, dans lequel
- le siège de joint annulaire (98) de la partie siège (48) du premier manchon (32) est orienté radialement à l'opposé de l'axe de référence (X) ; et/ou
- le siège de joint annulaire (100) de la partie siège (62) du second manchon (34) est orienté radialement à l'opposé de l'axe de référence (X) ; et/ou
- le siège de joint annulaire (98) de la partie siège (48) du premier manchon (32) est orienté axialement à l'opposé de la bague de palier interne (30) ; et/ou
- le siège de joint annulaire (100) de la partie siège (62) du second manchon (34) est orienté axialement à l'opposé de la bague de palier interne (30) ; et/ou
- le siège de joint annulaire (98) de la partie siège (48) du premier manchon (32) est conique ; et/ou
- le siège de joint annulaire (100) de la partie siège (62) du second manchon (34) est conique ; et/ou
- le siège de joint annulaire (98) de la partie siège (48) du premier manchon (32) a une forme convexe, de préférence avec un rayon de courbure constant, vu en coupe à travers un plan de coupe contenant l'axe de référence (X) ; et/ou
- le siège de joint annulaire (100) de la partie siège (62) du second manchon (34) a une forme convexe, de préférence avec un rayon de courbure constant, vu en coupe à travers un plan de coupe contenant l'axe de référence.

7. Ensemble palier à roulement (14) selon l'une quelconque des revendications précédentes, dans lequel le ou les chemins de roulement externes (28) sont constitués d'un chemin de roulement sphérique et les éléments de roulement (20, 22) sont des rouleaux en forme de tonneau.

8. Ensemble palier à roulement (14) selon la revendication 7, dans lequel le siège de joint annulaire (98) de la partie siège (48) du premier manchon (32) et le siège de joint annulaire (100) de la partie siège (62) du second manchon (34) sont situés sur une sphère commune centrée sur l'axe de référence (X).

9. Ensemble palier à roulement (14) selon l'une quelconque des revendications précédentes, comprenant en outre un boîtier (72) renfermant la bague de palier externe (78) et fixé par rapport à la bague de palier externe (72).

10. Ensemble palier à roulement (14) selon la revendication 9, dans lequel
- au moins l'un parmi le premier joint externe (90) et le second joint externe (92) est fixé au corps de boîtier (74) du boîtier (72), renfermant la bague de palier externe (78) ; et/ou
- au moins l'un parmi le premier joint externe (90) et le second joint externe (92) est fixé à un support de joint annulaire (76) du boîtier (72).

11. Ensemble palier à roulement (14) selon l'une quelconque des revendications précédentes, comprenant en outre deux joints internes (94, 96), chacun fixé à la bague de palier externe (78), les deux joints internes (94, 96) étant situés axialement entre les premier et second joints externes (90, 92), le chemin de roulement externe sphérique (28) étant situé axialement entre les deux joints internes (94, 96), la bague de palier interne (30) étant pourvue de deux sièges de joint internes (126, 128), les deux chemins de roulement internes (24, 26) de la bague de palier interne (30) étant situés axialement entre les deux sièges de joint internes (126, 128), chacun des deux joints internes (94, 96) étant en contact coulissant avec un siège de joint interne respectif des deux sièges de joint internes (126, 128).

12. Ensemble arbre (10) comprenant un ensemble palier de roulement (14) selon l'une quelconque des revendications précédentes et un arbre (12) ayant une interface à ajustement serré avec la paroi d'interférence interne (58) du premier manchon (32) et aucun contact avec le second manchon (34).

13. Ensemble arbre (10) selon la revendication 12, dans lequel l'arbre (12) a un épaulement (54), et la partie siège (48, 62) de l'un des premier et second manchons (32, 34) a une face d'extrémité annulaire (52, 66) qui s'appuie contre l'épaulement (54).

14. Ensemble arbre (10) selon la revendication 11 ou la revendication 12, comprenant en outre une bague d'espacement (38) montée sur l'arbre (12), et la partie siège (48, 62) de l'un des premier et second manchons (32, 34) a une face d'extrémité annulaire (52, 66) qui s'appuie contre la bague d'espacement (38).
